# EUROPÄISCHE PATENTSCHRIFT

(11) **EP 2 815 186 B1**
(45) Veröffentlichungstag und Bekanntmachung des Hinweises auf die Patenterteilung: **21.12.2022**
(21) Anmeldenummer: 13704358.4
(22) Anmeldetag: 12.02.2013
(51) Int. Cl.: F24F 12/00

(54) **VORRICHTUNG ZUR KÜHLUNG UND/ODER WÄRMERÜCKGEWINNUNG**
DEVICE FOR COOLING AND/OR HEAT RECOVERY
DISPOSITIF DE REFROIDISSEMENT OU DE RÉCUPÉRATION DE CHALEUR

(30) Priorität: 17.02.2012 DE 102012003068; 09.03.2012 DE 102012004900
(43) Veröffentlichungstag der Anmeldung: 24.12.2014
(73) Patentinhaber: Kampmann GmbH & Co. KG, 49811 Lingen (Ems) (DE)
(72) Erfinder: VAN HEESWIJK, Frederik Simon, 3811 Amersfoort (NL)
(74) Vertreter: Möller, Friedrich
(86) Internationale Anmeldenummer: PCT/EP2013/000403
(87) Internationale Veröffentlichungsnummer: WO 2013/120600

(56) Entgegenhaltungen:
- EP-A1- 0 269 634
- EP-A2- 0 859 203
- DE-A1- 1 601 156
- DE-A1- 2 514 713
- JP-A- 2001 174 021
- US-A- 3 351 119
- US-A- 5 289 696
- US-A- 5 971 370
- US-A1- 2005 029 371
- US-A1- 2007 158 049

## Beschreibung

Die Erfindung betrifft eine Vorrichtung zur Kühlung und/oder zur Wärmerückgewinnung.

Die vorliegende Erfindung befasst sich mit einer Vorrichtung zur Kühlung und/oder zur Wärmerückgewinnung mit mindestens einem Wärmetauscher für gasförmige Medien. Der Wärmetauscher weist einen primären Strömungskanal und einen sekundären Strömungskanal auf, die physisch getrennt, aber thermisch gekoppelt sind. Durch diese Kanäle werden zwei Medien vorzugsweise im Kreuzstrom- oder Gegenstrom geleitet. Dabei wird zwischen den beiden Medien Energie in Form von Wärme ausgetauscht.

Einer der genannten Kanäle des Wärmetauschers, der sekundäre Kanal, verfügt über eine hydrophile Beschichtung an den Wänden, also die Fähigkeit ein flüssiges Medium, zum Beispiel Wasser, durch Kapillarwirkung aufzunehmen und über Verdunstung wieder abzugeben. Die Verdunstungswärme, die für die Verdunstung der Flüssigkeit aus der hydrophilen Schicht benötigt wird, wird dabei dem Medium aus dem benachbarten primären Kanal entnommen. Somit wird das Medium im primären Kanal durch Wärmeentzug abgekühlt ab. Dieser Prozess wird als indirekte Verdunstungskühlung bezeichnet und findet in vielen Wärmetauschern Anwendung.

Eine kritische Betrachtung dieser beispielsweise auch in EP 0 859 203 A2 beschriebenen Bauweise zeigt, dass der Gegenstromwärmetauscher aus einem Teil besteht, in dem sich die Medien tatsächlich im Gegenstrom zueinander bewegen, und einem Teil, in dem sich die Medien im Kreuzstrom zueinander bewegen. Deshalb ist das Verhältnis Kreuzstrom/ Gegenstrom bei Gegenstromwärmetauschern, angesichts des Wirkungsgrads sehr wichtig. Ein hoher Wirkungsgrad hat für die Wärmerückgewinnung und das Kühlen einen großen Einfluss auf die Wirkung des Wärmetauschers, falls dieser als Kühler benutzt wird.

Es sind Gegenstromwärmetauscher bis zu einem Luftvolumenstrom von 1.500 m³/h bekannt, bei denen der Druckverlust über die Kanäle nicht höher liegt als ca. 150 Pa. Würde man die Geometrie solche Wärmetauscher derartig hoch skalieren, dass sie theoretisch für Luftvolumenströme von zum Beispiel 10.000 m³/h geeignet wären, würde das Verhältnis zwischen Kreuzstrom- und Gegenstromanteil sehr ungünstig ausfallen. Der Kreuzstromanteil wäre viel größer als der Gegenstromanteil, was den Wirkungsgrad verschlechtert. Ein weiterer Nachteil ist, dass der Abstand zwischen den Platten stark vergrößert werden müsste, um den Druckverlust in Grenzen zu halten, was ebenfalls für den Wirkungsgrad des Wärmetauschers nachteilig ausfallen würde. Darüber hinaus besteht ein großer Nachteil darin, dass die sekundären Kanäle kaum vollständig mit der zu verdunstenden Flüssigkeit berieselt werden könnten. Dies vermindert die Wirkung eines Verdunstungskühlers weiter.

Man kann die genannte Art von Gegenstromwärmetauschern, geeignet für Luftvolumenströme von 1.500 m³/h, auch nebeneinander positionieren, so dass die Gesamtbreite des Plattenpakets größer wird, dies ist jedoch nur begrenzt möglich, weil sonst das Gehäuse, in dem die Gegenstromwärmetauscher aufgestellt werden, viel zu breit wird.

Berechnungen nach den geltenden aerodynamischen Prinzipien ergeben, dass der Prozentanteil vom Gegenstromanteil hinsichtlich der Gesamtoberfläche eines kleinen Wärmetauschers bei geringen Abmessungen viel größer und dementsprechend günstiger ist als bei Wärmetauschern mit großen Abmessungen. Außerdem ergeben die Rechnungen, dass der Plattenabstand für einen großen Wärmetauscher viel größer sein müsste als bei kleineren Wärmetauschern, da der Druckverlust zwischen den Platten sonst zu hoch werden würde und der Wärmetauscher nur ineffizient betrieben werden könnte.

Der Erfindung liegt die Aufgabe zugrunde, eine Vorrichtung zur Kühlung und/oder zur Wärmerückgewinnung zu schaffen, die eine große Leistung bei vergleichsweise hohem Wirkungsgrad ermöglicht und zudem über einen einfachen Aufbau verfügt.

Eine Vorrichtung zur Lösung dieser Aufgabe weist die Merkmale des Anspruchs 1 auf. Demnach ist die Vorrichtung zur Kühlung und/oder zur Wärmerückgewinnung mit aus mehreren zusammensetzbaren Wärmetauschermodulen mit jeweils einem Wärmetauscher gebildet. Durch das Zusammensetzen mehrerer Wärmetauschermodule, die jeweils einen eigenen Wärmetauscher aufweisen, wird ein größerer Wärmetauscher mit einer größeren Kühlleistung bzw. Wärmerückgewinnungsleistung geschaffen. Die Steigerung der Leistung verhält sich dabei linear zu der Anzahl der zusammengesetzten einzelnen Wärmetauschermodulen. Durch das modulare Zusammensetzen eines großen Wärmetauschers durch mehrere kleinere Wärmetauscher wird die Geometrie der Wärmetauscher, insbesondere die aerodynamischen Eigenschaften der Wärmetauscher, nicht beeinflusst. Durch dieses Nichtverändern der strömungstechnischen Eigenschaften der Wärmetauscher der Wärmetauschermodule können beliebig große Wärmetauscher hergestellt werden, die die gleiche Effizienz bzw. den gleichen Wirkungsgrad wie kleine Wärmetauscher aufweisen. Jedes Wärmetauschermodul weist zwei Lufteintrittsöffnungen und zwei Luftaustrittsöffnungen auf. Wenn der Wärmetauscher im Gegenstromverfahren betrieben wird, kühlt ein sekundärer Strom über ein Kühlmittel mindestens eine Wärmetauscherplatte des Wärmetauschers. Ein Frischluft führender Primärstrom wird an der mindestens einen Wärmetauscherplatte vorbei geführt, worauf sich die Frischluft abkühlt. Damit es nicht zur ungewollten Befeuchtung der Frischluft und zu Verwirbelungen kommt, laufen sowohl der Primär- als auch der Sekundärstrom in einem eigenen Kanal. Jeder dieser beiden Kanäle benötigt daher eine Öffnung und einen Ausgang. Es ist auch denkbar, dass der Wärmetauscher mehr als zwei Kanäle aufweist. Die Lufteintrittsöffnung und die Luftaustrittsöffnung von aufeinanderfolgenden Wärmetauschermodulen sind dabei gleichermaßen von der gemeinsamen Abluftführung und der gemeinsamen Zuluftführung versorgbar. Dazu ist die Abluftführung bzw. die Zuluftführung direkt mit allen Lufteintrittsöffnungen bzw. Luftaustrittsöffnungen gleichermaßen verbunden. Den Wärmetauschermodulen ist außerdem ein gemeinsamer Befeuchtungswasserspeicher zugeordnet, wobei auch dem Befeuchtungswasserspeicher ein Gehäuse aufweist. Der Befeuchtungswasserspeicher für Befeuchtungswasser weist mindestens eine Pumpe auf, mit der das Befeuchtungswasser aus dem Befeuchtungswasserspeicher den Wärmetauschermodulen zuführbar ist.

Durch das modulare Zusammensetzen der Wärmetauschermodule zu einer Vorrichtung zum Kühlen oder zur Wärmerückgewinnung, kann die Größe der Wärmetauscher der tatsächlich benötigten Kühlleistung bzw. Wärmerückgewinnungsleistung angepasst werden. Eine Vorrichtung mit der gewünschten Kühlung und/oder zur Wärmerückgewinnungsleistung kann somit aus einer entsprechend großen Anzahl von Wärmetauschermodulen zusammengesetzt werden, wobei der Anzahl der Wärmetauschermodule keine Grenzen gesetzt sind.

Außerdem ist es vorgesehen, dass die Wärmetauschermodule derart zusammensetzbar sind, dass ihre Wärmetauscher in einer Parallelschaltung betreibbar sind. Der Betrieb der Wärmetauschermodule in einer Parallelschaltung ist besonders für Luftzuleitungen und Abluftleitungen für die einzelnen Wärmetauscher vorteilhaft, da so für die Zuluft- und die Abluftleitung aller Wärmetauschermodule jeweils nur eine Leitung benötigt wird. Insbesondere wird bei einem defekten Wärmetauschermodul der Betrieb der Vorrichtung nicht unterbrochen, wie es bei in Reihe geschalteten Wärmetauschern der Fall sein kann. Der Leistungsausfall kann einfach durch die anderen Wärmetauschermodule kompensiert werden.

Eine Weiterbildung der Vorrichtung sieht es vor, dass die mehreren Wärmetauschermodule vertikal übereinander und/oder horizontal nebeneinander zusammenkoppelbar bzw. zusammenstapelbar sind. Die Erfindung sieht es vor, dass die einzelnen Wärmetauschermodule zusammenkoppelbar sind. Dieses Zusammenkoppeln kann in Abhängigkeit von den räumlichen Gegebenheiten vertikal übereinander oder horizontal nebeneinander stattfinden. Außerdem ist es denkbar, dass das Zusammenkoppeln sowohl vertikal als auch horizontal geschieht. Durch dieses Zusammenkoppeln werden sämtliche thermodynamischen Eigenschaften des einzelnen Wärmetauschermoduls mit der Anzahl der verwendeten Wärmetauschermodule proportional hochskaliert bzw. multipliziert.

Bei der erfindungsgemäßen Vorrichtung ist es vorgesehen, dass die Lufteintrittsöffnungen und die Luftaustrittsöffnungen von aufeinanderfolgenden Wärmetauschermodulen übereinanderliegen und die Wärmetauschermodule eine gemeinsame Zuluftführung und eine gemeinsame Abluftführung aufweisen. Durch das Übereinanderliegen der Lufteintrittsöffnungen und der Luftaustrittsöffnungen der aufeinanderfolgenden Wärmetauschermodule können die Öffnungen jeweils zu einer Einheit zusammengefasst werden. Dadurch wird es möglich, dass die gemeinsame Zuluftführung und die gemeinsame Abluftführung jeweils aus einem Bauteil bestehen.

Weiter ist es vorgesehen, dass jedes Wärmetauschermodul ein Mittel zum Befeuchtungswasserzulauf und ein Mittel zum Befeuchtungswasserablauf aufweist, wobei die Mittel vorzugsweise durch das Verbinden bzw. Zusammenkoppeln der Wärmetauschermodule verbindbar sind. Das Mittel zum Befeuchtungswasserzulauf kann insbesondere ein durch einzelne Rohrsegmente bildbares Rohr sein. Das Mittel zum Befeuchtungswasserablauf kann insbesondere ein aus Kanalsegmenten zusammensteckbarer Kanal sein. Die Kanalsegmente sind jeweils über eine Ablauföffnung mit den Wärmetauschermodulen gekoppelt.

Des Weiteren ist eine besonders vorteilhafte Ausgestaltung der Vorrichtung dadurch gekennzeichnet, dass den Wärmetauschermodulen ein gemeinsamer Befeuchtungswasserspeicher für Befeuchtungswasser zugeordnet ist, der mindestens eine Pumpe aufweist, mit der überschüssiges Befeuchtungswasser zum Befeuchtungswasserspeicher zurückfahrbar ist. Dabei kann der Befeuchtungswasserspeicher als eine Wanne, die einen Vorrat an Befeuchtungswasser aufnimmt und/oder das Befeuchtungswasser auffängt, ausgebildet sein; oder eine Rohrleitung aufweisen, in der Befeuchtungswasser direkt zusammenführbar wird und durch die Pumpe den Wärmetauschermodulen wieder zuführbar ist.

Vorzugsweise ist außerdem vorgesehen, dass die Wärmetauschermodule Mittel zum ineinandergreifenden Zusammensetzen aufweisen. Dadurch ist aus den einzelnen Wärmetauschermodulen ein Wärmetauscher mit einer der Anzahl der Wärmetauschermodulen entsprechenden Leistung nach einem "Klemmbausteinprinzip" zusammensetzbar. Die Anzahl der zusammengesetzten Wärmetauschermodule ist beliebig.

Es ist als besonders vorteilhafte Weiterbildung der Erfindung vorgesehen, dass der Befeuchtungswasserspeicher und jedes Wärmetauschermodul ein den Wärmetauscher umgebendes Gehäuse aufweist, welches aus gleichen Gehäusehälften gebildet ist. Durch die Bildung des Gehäuses aus gleichen Gehäusehälften erlangt die modular aufbaubare Vorrichtung ihre Flexibilität. Die Gehäusehälften sind derart beschaffen, dass sie zusammensetzbar, ineinanderfügbar und zwischen verschiedenen Wärmetauschermodulen austauschbar sind. Außerdem wird nur eine Art Gehäusehälften benötigt, um aus den gleichen Gehäusehälften einen beliebig großen Wärmetauscher herzustellen.

Bevorzugt ist es weiter vorgesehen, dass die Gehäusehälften der Wärmetauschermodule und der Befeuchtungswasserspeicher jeweils ineinandergreifende Vertiefungen und korrespondierende Vorsprünge aufweisen, durch welche die Gehäusehälften ineinandergreifen und/oder formschlüssig zusammensetzbar sind. Durch das Ineinandergreifen der Vertiefungen und der korrespondierenden Vorsprünge wird eine Verzahnung der Gehäusehälften, insbesondere einer oberen und einer unteren Nahtfläche erreicht und dadurch ein relatives Verrutschen der Gehäusehälften unterbunden.

Weiter sieht es die Erfindung vor, dass die, vorzugsweise alle, Wärmetauschermodule zusammen von einem gemeinsamen Gehäuse umschlossen werden. Die aus der Summe aller Wärmetauschermodule gebildete Vorrichtung ist von einem gemeinsamen Gehäuse komplett umschließbar. Das gemeinsame Gehäuse wirkt besonders schalldämmend und fängt eventuell entweichende Feuchtigkeit der einzelnen Wärmetauschermodule auf. Außerdem verleiht das gemeinsame Gehäuse der Vorrichtung eine Kompaktheit.

Ein bevorzugtes Ausführungsbeispiel der Erfindung wird nachfolgend anhand der Zeichnung näher erläutert. In dieser Zeichnung zeigen:
- Fig. 1: eine schematische Darstellung einer Vorrichtung zur Kühlung mit mehreren Wärmetauschermodulen,
- Fig. 2: die Vorrichtung mit übereinandergestapelten Wärmetauschermodulen,
- Fig. 3: ein Wärmetauschermodul mit schematisch dargestellten Primärstrom,
- Fig. 4: ein Wärmetauschermodul mit schematisch dargestellten Sekundärstrom,
- Fig. 5: ein Wärmetauscher und zwei Gehäusehälften eines Wärmetauschermoduls,
- Fig. 6: Einrichtung zum Befeuchten der Wärmetauscherplatten im teilweisen Schnitt, und
- Fig. 7: ein Befeuchtungswasserspeicher im teilweise Schnitt.

Die in der Zeichnung dargestellte Vorrichtung 10 dient zur Kühlung von zum Beispiel Raum- oder Umluft nach dem Verdunstungsprinzip. Die Vorrichtung 10 ist modular aus mehreren einzelnen gleichen Wärmetauschermodulen 11 zusammensetzbar. Jedes Wärmetauschermodul 11 weist einen eigenen Wärmetauscher 29 auf. So lässt sich die Vorrichtung 10 aus einer entsprechenden Anzahl mehrerer (kleiner) Wärmetauschermodule 11 derart zusammensetzen, dass die Kühlleistung der aus mehreren zusammengesetzten Wärmetauschermodulen 11 gebildeten Vorrichtung 10 der Summe der Leistung jedes einzelnen Wärmetauschermoduls 11 entspricht.

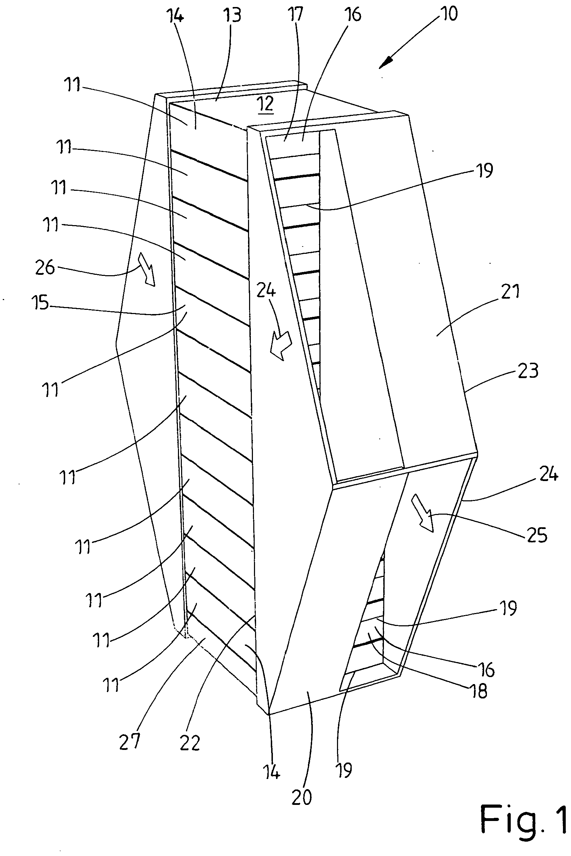

Die Vorrichtung 10 ist im dargestellten Ausführungsbeispiel zusammengesetzt aus mehreren übereinander gestapelten schachtelförmigen Wärmetauschermodulen 11 (Fig. 1). Die einzelnen Wärmetauschermodule 11 sind derart deckungsgleich übereinandergestapelt, dass ein folgendes Wärmetauschermodul 11mit seiner Unterseite 50 auf der Oberseite 12 eines vorangegangenen Wärmetauschermoduls 11 aufgesetzt ist. Die Basis der in Figur 1 dargestellten Vorrichtung 10 bildet ein Befeuchtungswasserspeicher 27. Auf den Befeuchtungswasserspeicher 27 sind die Wärmetauschermodule 11 gestapelt. Die übereinandergestapelten Wärmetauschermodule 11 und der Befeuchtungswasserspeicher 27 sind derart zusammenkoppelbar, dass sie zusammen eine Einheit bilden.

Die einzelnen Wärmetauschermodule 11 und der Befeuchtungswasserspeicher 27 weisen jeweils ein Gehäuse 13 auf. Die Gehäuse 13 aller Wärmetauschermodule 21 und des Befeuchtungswasserspeichers 27 sind gleich ausgebildet. Die Gehäuse 13 der Wärmetauschermodule 11 und des Befeuchtungswasserspeichers 27 können aus Kunststoff oder auch aus Metall- oder Aluminiumblech bestehen.

Jedes der gleichen Gehäuse 13 ist aus zwei Gehäusehälften gebildet, und zwar einer unteren Gehäusehälfte 41 und einer oberen Gehäusehälfte 47. Im gezeigten Ausführungsbeispiel sind die Gehäusehälften 41 und 47 gleich ausgebildet und umgekehrt mit zusammengerichteten offenen Stirnseiten zum jeweiligen Gehäuse 13 zusammengesetzt. Das Gehäuse 13 besitzt eine geschlossene Oberseite 12, eine geschlossene Unterseite und jeweils zwei gegenüberliegende geschlossene Seitenwände 14. Beim Übereinanderstapeln der Wärmetauschermodule 11 bilden die einzelnen Seitenwände 14 der Gehäuse 13 der Wärmetauschmodule 11 zusammen eine geschlossene Fläche 15 der Vorrichtung 10. Die in Fig. 1 nur teilweise sichtbaren gegenüberliegenden Stirnseiten 16 der Wärmetauschermodule 11 sind zum Teil geöffnet.

Jedes Gehäuse 13 eines Wärmetauschermoduls 11 verfügt auf den beiden gegenüberliegenden Stirnseiten 16 jeweils über einen Eingang 17 und einen Ausgang 18. Der Eingang 17 und der Ausgang 18 stellen Öffnungen für Luftströme bzw. gasartige Medien dar. In dem in Fig. 1 gezeigten Ausführungsbeispiel nehmen der Eingang 17 und der Ausgang 18 einer Stirnseite 16 jeweils ein Viertel, d.h. gerade einmal die Hälfte der Länge und die Hälfte der Höhe, der Stirnseite 16 ein. Der Eingang 17 und der Ausgang 18 sind diagonal zueinander versetzt auf der Stirnseite 16 positioniert. Die entsprechenden anderen beiden Viertel der Stirnseite 16 sind geschlossen. Die der Stirnseite 16 gegenüberliegenden Stirnseite 16 des Gehäuses 13 verhält sich mit der zuvor beschriebenen genau spiegelverkehrt. An den beiden gegenüberliegenden Stirnseiten 16 des Gehäuses 13 des Wärmetauschmoduls 11 sind an den Übergängen zwischen den Eingängen 17 und den Ausgängen 18 Trennplatten 19 installiert.

Jeweils ein Eingang 17 und ein Ausgang 18 liegen sich entlang der Trennplatte 19 diagonal auf gegenüberliegenden Stirnseiten 16 des Gehäuses 13 gegenüber. Somit weist jede Stirnseite 16 des Gehäuses 13 jeweils ein Eingang 17 und ein Ausgang 18 auf, die dem Ausgang 18 und dem Eingange 17 auf der gegenüberliegenden Stirnseite 16 des Gehäuses 13 diagonal gegenüberliegen. Es steht so jeweils ein Eingang 17 einer Stirnseite 16 mit einem Ausgang 18 auf der gegenüberliegenden Stirnseite 16 in einer kanalartigen Verbindung. Auf diese Art wird jeweils ein Eingang 17 einer Stirnseite 16 mit dem entsprechenden Ausgang 18 der anderen Stirnseite 16 kanalartig verbunden, sodass das Wärmetauschermodul 11 zwei voneinander getrennte Kanäle aufweist.

Da die beiden Kanäle eines Wärmetauschermoduls 11 jeweils zwei diagonal gegenüberliegende Öffnungen (Eingang 17 und Ausgang 18) verbinden und die Eingänge 17 und Ausgänge 18 sich auf den beiden Stirnseiten 16 spiegelbildlich gegenüber liegen, kreuzen sich die beiden Kanäle entlang der Ebene der Trennplatte 19. Da sich zusätzlich die Eingänge 17 bzw. die Ausgänge 18 der Kanäle auf der gegenüberliegenden Stirnseite befinden, stellt der vorliegende Wärmetauscher 29 einen Kreuzgegenstrom-Wärmetauscher dar.

Bei einem Kreuzgegenstrom-Wärmetauscher wird durch einen Kanal (Primärkanal) zu kühlende Luft, beispielsweise Außenluft 42,durch den Wärmetauscher 29 geleitet und an den Wärmetauscherplatten 30 gekühlt und als Zuluft 44 einen zu klimatisierenden Raum wieder zugeführt. Durch den zweiten Kanal (Sekundärkanal) strömt Abluft 45, welche dazu verwendet wird, die Verdunstung der befeuchteten Innenwände des sekundären Kanals zu verstärken, um dann als feucht Fortluft 46 den Wärmetauscher zu verlassen. Durch die Verdunstung an den befeuchteten Innenwänden des Sekundärkanals, werden die Wärmetauscherplatten und somit der Primärkanal gekühlt. Dieser Prozess wird als indirekte Verdunstungskühlung bezeichnet.

Da alle Wärmetauschermodule 11 identisch sind, liegen die Eingänge 17 und Ausgänge 18 der Stirnseiten 16 der einzelnen Wärmetauschmodule 11 übereinander. Das in Fig. 1 dargestellte Ausführungsbeispiel der Vorrichtung 10 weist an den Stirnseiten 16 jeweils ein allen Eingängen 17 der Wärmetauschmodule 11 gemeinsamen Abluftkanal 20 und einen allen Ausgängen 18 der Wärmetauschermodule 11 gemeinsamen Zuluftkanal 21 auf. Der Zuluftkanal 21 ist von dem Abluftkanal 20 getrennt. Sowohl der Abluftkanal 20 als auch der Zuluftkanal 21 bilden im dargestellten Ausführungsbeispiel der Fig. 1 ein gleichschenkliges Dreieck, wobei die Hypotenuse 22 an den Stirnseiten 16 der Wärmetauschermodule 11 anliegt, eine Kathete 23 geschlossen und eine Kathete 23 geöffnet ist.

Der auf dem Abluftkanal 20 dargestellte Pfeil 24 beschreibt die Richtung, in die die Luft in den Abluftkanal 20 und somit in alle Eingänge 17 der Wärmetauschermodule 11 hineinströmt. Der an dem Zuluftkanal 21 dargestellte Pfeil 25 beschreibt die Richtung, aus der Luft aus den Ausgängen 18 aller Wärmetauschermodule 11 durch den Zuluftkanal 21 herausströmt. Auf der gegenüberliegenden Stirnseite 16 der Wärmetauschermodule 11 sind ein Fortluftkanal und ein Außenluftkanal in gleicher Weise den Wärmetauschermodulen 11 zugeordnet. Dort kennzeichnet ein Pfeil 26 die Einströmrichtung der Luft in den Zuluftkanal 21 und somit in die Eingänge 17 der Wärmetauschermodule 11.

Die in Fig. 1 dargestellte Vorrichtung kann aus beliebig vielen gleichen übereinandergestapelten Wärmetauschermodulen 11 zusammengesetzt werden. Außerdem kann die Vorrichtung nach der in Fig. 1 dargestellten Form in mehrfacher Ausführung auch nebeneinander betrieben werden.

Im in Fig. 1 dargestellten Ausführungsbeispiel der Vorrichtung 10 weist jedes Wärmetauschermodul 11 eine Länge von 650 mm, eine Höhe von 180 mm und eine Breite von 600 mm auf. Die Gesamthöhe der Vorrichtung 10 ergibt sich somit aus der Summe der Höhen aller Wärmetauschermodule 11 und des in den Abmessungen eines Wärmetauschermoduls 11 entsprechenden modulartigen Befeuchtungswasserspeicher 27.

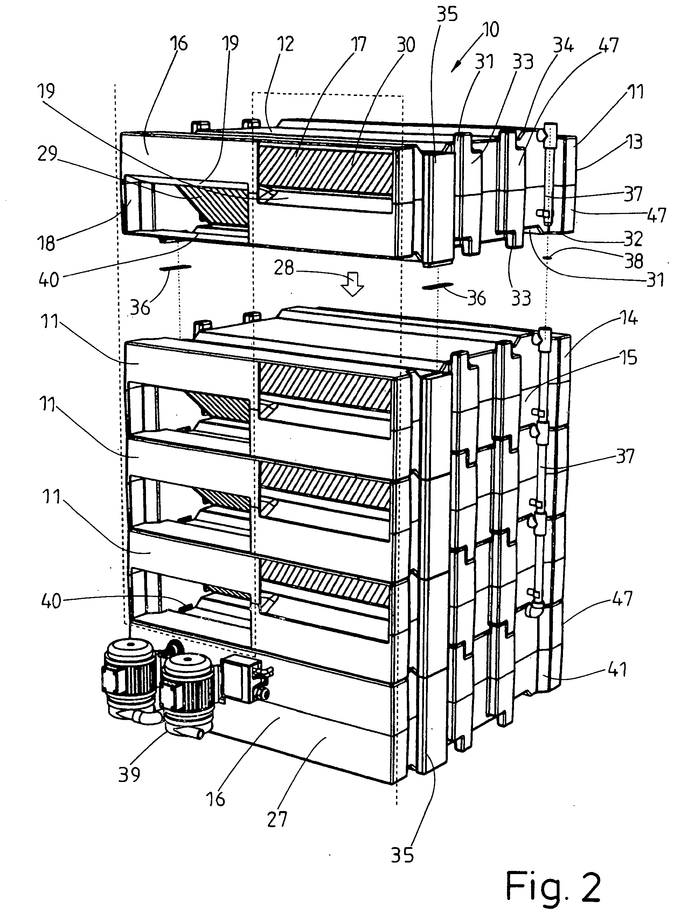

In der Fig. 2 ist die erfindungsgemäße Vorrichtung 10 ohne die Abluftkanäle 20 und die Zuluftkanäle 21 dargestellt. Die Fig. 2 zeigt den Befeuchtungswasserspeicher 27, drei auf den Befeuchtungswasserspeicher 27 übereinandergestapelte Wärmetauschermodule 11 und ein weiteres Wärmetauschermodul 11, welches gekennzeichnet durch den Pfeil 28 auf die bereits zusammengesetzten Wärmetauschermodule 11 gesetzt wird.

Jedes Wärmetauschmodul 11 weist ein Gehäuse 13 auf, welches an den Stirnseiten 16 jeweils einen Eingang 17 und einen Ausgang 18 aufweist. Im Inneren eines jeden Wärmetauschermoduls 11 befindet sich der einzige Wärmetauscher 29. Der Wärmetauscher 29 besteht im Wesentlichen aus einer Vielzahl aufrechtstehender parallel zueinander ausgerichteter und beabstandeter Wärmetauscherplatten 30. Die Wärmetauscherplatten 30 sind so ausgerichtet, dass sie senkrecht zu den Eingängen 17 bzw. Ausgängen 18 stehen.

Jedes Gehäuse 13 eines Wärmetauschermoduls 11 weist zwei gegenüberliegende Seitenwände 14 auf. Diese Seitenwände 14 weisen an ihrer unteren Kante 32 Vertiefungen 31 und Vorsprünge 33 auf. Die entsprechende obere Kante 34 einer Seitenwand 14 weist korrespondierend zu den Vorsprüngen 33 und Vertiefungen 31 der unteren Kante 32 ebenfalls Vertiefungen 31 und Vorsprünge 33 auf. Beim Übereinanderstapeln einzelner Wärmetauschermodule 11 greifen die Vorsprünge 33 und die Vertiefungen 31 einer oberen Kante 34 beider gegenüberliegenden Seitenwänden 14 in die korrespondierenden Vorsprünge 33 und Vertiefungen 31 an einer unteren Kante 32 von zwei gegenüberliegenden Seitenwänden 14 eines folgenden Wärmetauschermoduls 11. Durch das Ineinandergreifen der Vertiefungen 31 mit den Vorsprünge 33 zweier aufeinanderfolgender Gehäuse 13 der Wärmetauschmodule 11 wird ein formschlüssiges und passgenaues Zusammenfügen aufeinanderfolgender Wärmetauschermodule 11 erreicht.

Die beiden Gehäusehälften 41 und 47 jedes Gehäuses 13 sind an ihren zueinander gerichteten Stirnflächen deckungsgleich zentriert zusammengesetzt und miteinander verbunden. Geeignet (nicht gezeigte) Zentriermittel halten die Gehäusehälften 41 und 47 jedes Gehäuses 13 in ihrer zentriert übereinanderliegenden Position.

Die beiden gegenüberliegenden Seitenwände 14 eines jeden Gehäuses 13 der Wärmetauschermodule 11 und des Befeuchtungswasserspeichers 27 weisen jeweils ein Segment eines Abwasserkanalsegments 35 auf. Durch das Übereinanderstapeln der einzelnen Wärmetauschermodule 11 werden die einzelnen Abwasserkanalsegmente 35 derart zusammengefügt, dass ein zusammenhängender fallrohrartiger Abwasserkanal entsteht, der alle Wärmetauschermodule 11 und den Befeuchtungswasserspeicher 27 miteinander verbindet. Jeweils zwei aufeinanderfolgende Abwasserkanalsegmente werden mittels eines Dichtungsrings 36 derart zusammengefügt, dass kein Wasser ungewollt den Abwasserkanal verlassen kann.

Jedes Wärmetauschermodul 11 und der Befeuchtungswasserspeicher 27 weisen außerdem an einer seiner Seitenwände 14 ein Rohrsegment 37 auf. Die einzelnen Rohrsegmente 37 eines jeden Wärmetauschermoduls 11 und der Befeuchtungswasserspeicher 27 werden beim Übereinanderstapeln zu einem Rohr zusammengesetzt. Zur Abdichtung der einzelnen Rohrsegmente 37 untereinander wird beim Zusammenfügen der einzelnen Rohrsegmente 37 ein Abdichtungsring 38 zwischen zwei Rohrsegmente 37 eingebracht.

Als untere Basis der Vorrichtung 10 dient der Befeuchtungswasserspeicher 27, auf dem die einzelnen Wärmetauschermodule 11 gestapelt werden. Das Gehäuse 13 bzw. die Seitenwände 14 des Befeuchtungswasserspeichers 27 weist an seinen oberen Kanten 34 die gleichen Vertiefungen 31 und die gleichen Vorsprünge 33 auf, wie die Wärmetauschermodule 11. Dadurch wird eine formschlüssige und passgenaue Verbindung zwischen dem Befeuchtungswasserspeicher 27 und dem untersten Wärmetauschermodul 11 erzeugt. Eine derartige formschlüssige Verbindung der einzelnen Wärmetauschermodule 11 untereinander bzw. der Wärmetauschermodule 11 mit dem Befeuchtungswasserspeicher 27 verhindert ein ungewolltes Verrutschen der einzelnen Wärmetauschermodule 11 und des Befeuchtungswasserspeichers 27 untereinander.

Der Befeuchtungswasserspeicher 27 weist an einer Stirnseite 16 im dargestellten Ausführungsbeispiel eine Pumpe 39 auf. Mittels dieser Pumpe 39 wird Wasser aus dem Befeuchtungswasserspeicher 27 durch die einzelnen Rohrsegmente 37 eines jeden Wärmetauschermoduls 11 gleichermaßen in die Wärmetauschermodule 11 gepumpt. Dort dient das Wasser zur Befeuchtung der Wärmetauscherplatten 30. Verbrauchtes Kühlwasser bzw. Wasser, das an den Wärmetauscherplatten 30 herabtropft bzw. herabgelaufen ist, wird von in den Gehäusen 13 integrierten Auffangschalen 40 gesammelt. Diese Auffangschalen 40 eines jeden Wärmetauschermoduls 11 stehen in Kontakt mit den Abwasserkanalsegmenten 35 eines jeden Wärmetauschermoduls 11. Das in den Auffangschalen 40 gesammelte Wasser fließt durch die einzelnen Abwasserkanalsegmente 35 zurück in den Befeuchtungswasserspeicher 27, wo es gesammelt wird, um dann mittels der Pumpen 39 durch die Rohrsegmente 37 wieder den einzelnen Wärmetauschermodulen 11 zur Befeuchtung der Wärmetauscherplatten 30 zugeführt zu werden.

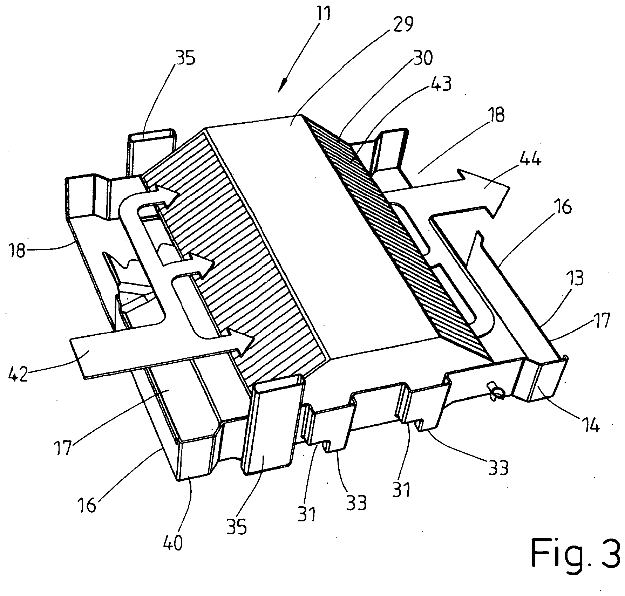

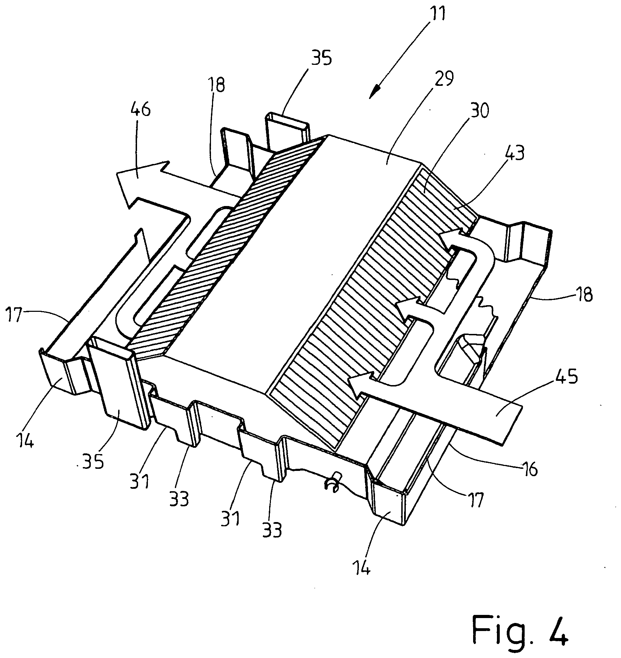

In den Fig. 3 und 4 wird das Prinzip der indirekten Verdunstungskühlung anhand eines Ausführungsbeispiels eines Wärmetauschermoduls 11 und mittels Pfeilen, die die Luftströmung symbolisieren sollen, dargestellt. In Fig. 3 ist eine untere Hälfte 41 des Wärmetauschermoduls 11 mit einer Draufsicht auf die Wärmetauscherplatten 30 dargestellt. Die untere Hälfte 41 des Wärmetauschermoduls 11 weist einen Eingang 17 und einen Ausgang 18 auf. Durch den Eingang 17 des Wärmetauschermoduls 11 strömt Außenluft 42 (hier gekennzeichnet durch einen Dreifachpfeil) in das Gehäuse 13 hinein und strömt im Folgenden durch die Zwischenräume 43 der Wärmetauscherplatten 30. Während die Außenluft 42, insbesondere Frischluft, durch die Zwischenräume 43 der Wärmetauscherplatten 33 strömt, wird die Außenluft 42 abgekühlt. Die Außenluft 42 tritt an der gegenüberliegenden Seite der Wärmetauscherplatten als gekühlte Zuluft 44 aus dem Ausgang 18 des Wärmetauschermoduls 11 aus.

In der Fig. 4 ist die gleiche untere Hälfte 41 eines Wärmetauschermoduls 11 dargestellt wie in Fig. 3. Allerdings tritt hier Abluft 45 (dargestellt durch einen Dreifachpfeil) durch den gegenüberliegenden Eingang 17 in das Innere des Gehäuses 13 ein. Die Abluft 45 strömt durch die Zwischenräume 43 der Wärmetauscherplatten 30. Allerdings strömt die Abluft 45 durch die befeuchteten Zwischenräume 43 der Wärmetauscherplatten 30. Bedingt durch den Luftstrom durch die Wärmetauscherplatten 30 kommt es verstärkt zur Verdunstung des Wasser der befeuchteten Wärmetauscherplatten 30. Durch den Verdunstungsprozess werden die befeuchteten Wärmetauscherplatten 30 gekühlt. Die Abluft 45 tritt als feuchte Fortluft 46 aus den Wärmetauscher 29 durch den Ausgang 18 des Wärmetauschermoduls 11 aus.

Der vorliegende Kreuzgegenstrom-Wärmetauscher ist so gestaltet, dass die Abluft 45 bzw. die Fortluft 46 nicht in Kontakt kommt mit der Außenluft 42 bzw. der Zuluft 44. Die nicht dargestellten Kanäle im Inneren des Wärmetauschers 29 sind derart geführt, dass die Abluft 45 durch die Zwischenräume zwischen entsprechenden benachbarten Wärmetauscherplatten 30 strömt, dabei Feuchtigkeit aufnimmt und dadurch die Wärmetauscherplatten kühlt und als Fortluft 46 den Wärmetauscher 29 wieder verlässt. Während die Außenluft 42 durch einen unbefeuchteten, gekühlten Kanal tritt, dabei Wärme abgibt bzw. gekühlt wird, und als gekühlte Zuluft 44 den Wärmetauscher 29 wieder verlässt.

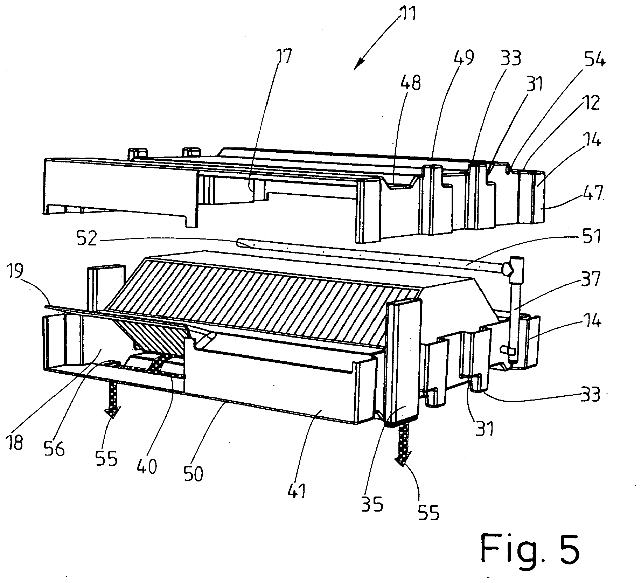

Die Fig. 5 zeigt ein Wärmetauschermodul 11, wobei die untere Gehäusehälfte 41 noch nicht mit einer oberen Gehäusehälfte 47 des Gehäuses 13 zusammengefügt ist. Die untere Gehäusehälfte 41 und die obere Gehäusehälfte 47 des Gehäuses 13 sind so ausgebildet, dass die beiden Gehäusehälften 41 und 47 im zusammengesetzten Zustand auf jeder der dann gebildeten Stirnseiten 16 einen Eingang 17 und einen Ausgang 18 bilden. Die obere Gehäusehälfte 47 wird auf die untere Gehäusehälfte 41 gesetzt und damit verbunden. Die obere Gehäusehälfte 47 weist auf seiner Oberseite 12 Vertiefungen 48 und Erhebungen 49 auf. Diese Vertiefungen 48 und Erhebungen 49 der oberen Gehäusehälfte 47 fügen sich beim Zusammenstapeln der Wärmetauschermodule 11 in korrespondierende Vertiefungen 48 und Erhebungen 49 der Unterseite 50 des darauffolgenden Wärmetauschermoduls 11 ein. Auf diese Art und Weise wird erreicht, dass die übereinandergestapelten Wärmetauschermodule 11 nicht gegeneinander verrutschen.

Wie bereits oben beschrieben, weist die untere Gehäusehälfte 41 an den Seitenwänden 14 Vertiefungen 31 und Vorsprünge 33 auf, die beim Übereinanderstapeln der einzelnen Wärmetauschermodule 11 mit den Vertiefungen 31 und Vorsprüngen 33 an den Seitenwänden 14 der oberen Gehäusehälfte 47 ineinandergreifen.

Von dem Rohrsegment 37 erstreckt sich rechtwinklig eine Lanze 51 in das Gehäuse 13 hinein. Die Lanze 51 verläuft parallel zu dem Wärmetauscher 29 und senkrecht zu den Wärmetauscherplatten 30. Die Lanze 51 weist in einem gleichmäßigen Abstand Löcher 52 auf. Durch die Löcher 52 können, gespeist durch die Rohrsegmente 37 und die Lanze 51, Wasserstrahlen 53 austreten.

Die Anzahl der Löcher 52 in der Lanze 51 ist variabel und kann entsprechend der Anzahl der Wärmetauscherplatten 30 gewählt werden. Der Durchmesser der Löcher 52 ist derart zu wählen, dass schon bei geringem Wasserdruck ein gerichteter Wasserstrahl 53 erzeugt wird.

An der oberen Kante 34 der Seitenwand 14 der oberen Hälfte 47 des Gehäuses 13 ist eine Öffnung 54 vorgesehen. Durch diese Öffnung 54 erstreckt sich bei zusammengesetzten unteren Gehäusehälften 41 und oberen Gehäusehälften 47 die Lanze 51 in das Wärmetauschermodul 11 hinein.

In der Fig. 5 ist in der unteren Hälfte 41 durch Pfeile 55 der Verlauf des überschüssiges Wasser aus dem Wärmetauscher 29 in der jeweiligen Auffangschale 40, von wo aus es durch Abflüsse 56 in den Abwasserkanal 35 gelangt, dargestellt. Durch diesen Abwasserkanal 35 wird das Abwasser in den Befeuchtungswasserspeicher 27 zurückgeleitet.

In der Fig. 5 ist die Trennwand 19 dargestellt, die die untere Hälfte 41 von der oberen Hälfte 47 des Gehäuses 13, sowie den Eingang 17 von dem Ausgang 18 trennt. Sie dient dazu, dass Außenluft 42 nicht mit Fortluft 46 und Zuluft 44 nicht mit Abluft 45 gemischt wird.

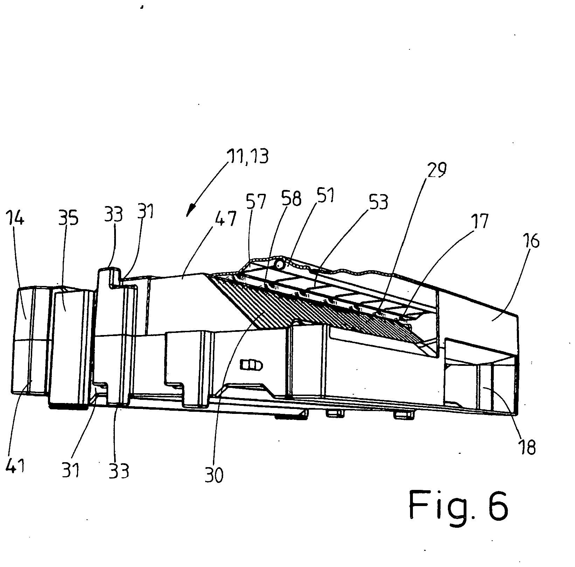

Die Fig. 6 stellt ein aufgeschnittenes Wärmetauschermodul 11 dar, wobei der Blick auf die Einrichtung zum Befeuchten der Wärmetauscherplatten 30 fällt. Aus der Lanze 51 tritt aus jedem Loch 52 ein Wasserstrahl 53 quer zu den Wärmetauscherplatten 30 aus. Alle Wasserstrahlen 53 sind auf eine Prallfläche 57 gerichtet. Bei dieser Prallfläche 57 kann es sich entweder um die Innenseite einer Vertiefung 48 des Gehäuses 13 handeln, oder um eine extra als Prallfläche 57 wirkende, eingeführte Leiste. Die Prallfläche 57 ist relativ zu de Wasserstrahlen 53 und den Wärmetauscherplatten 30 schräggestellt. Diese Schrägstellung ist derart, dass die Wasserstrahlen 53 unter einem Winkel auf die Prallfläche 57 treffen, der ungleich 90 Grad ist, vorzugsweise 20 Grad bis 80 Grad, insbesondere 40 Grad bis 50 Grad beträgt. Die Prallfläche 57 verläuft schräg zu den senkrecht gerichteten Wärmetaucherplatten 30. Dadurch wird ein durch das Auftreffen der Wasserstrahlen 53 auf die Prallfläche 57 erzeugte Befeuchtungsvorhang 58 auf die Wärmetauscherplatten 30 gelenkt, und zwar vorzugsweise so, dass der Befeuchtungsvorhang 58 senkrecht zu den Wärmetauscherplatten 30 gerichtet ist. Das Wasser des Befeuchtungsvorhanges 58 liegt in feinsten Tröpfchen vor und setzt sich auf die vorzugsweise hydrophilen Oberflächen der Wärmetauscherplatten 30 ab. Die Tröpfchen des Befeuchtungsvorhanges 58, die nicht an den Wärmetauscherplatten 30 hängen bleiben, werden von der Auffangschale 40 gesammelt und dem Befeuchtungswasserspeicher 27 wieder zugeführt.

Eine derartige Einrichtung zur Befeuchtung der Wärmetauscherplatten 30 bestehend aus einer Lanze 51 kann entweder nur eine Seite der Wärmetauscherplatten 30 befeuchten oder beide gegenüberliegenden Seiten der Wärmetauscherplatten 30.

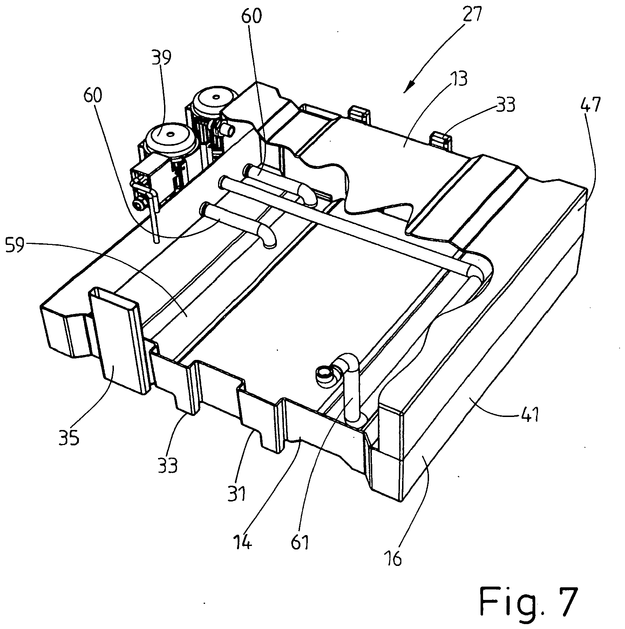

In der Fig. 7 ist ein Teilschnitt des Befeuchtungswasserspeichers 27 dargestellt. Der Befeuchtungswasserspeicher 27 weist ebenfalls an zwei gegenüberliegenden Seitenwänden 14 jeweils ein Abwasserkanalsegment 35 auf. Diese beiden Abwasserkanalsegmente 35 sind über einen vertikalen Kanal 59, der sich in den Befeuchtungswasserspeicher 27 hinein erstreckt, miteinander verbunden. Der vertikale Kanal 59 ist über zwei Abflussrohre 60 mit der Pumpe 39 verbunden. Von der Pumpe 30 wiederum erstreckt sich ein Zuflussrohr 61 durch das Innere des Befeuchtungswasserspeichers 27, das mit dem Rohrsegment 37 des untersten Wärmetauschermoduls 11 verbunden ist. Durch dieses System aus Abwasserwasserkanalsegmenten 35, Vertikalkanal 59, Pumpe 39, Zuflussrohr 61, Rohrsegmenten 37 und Lanze 51 wird ein Wasserkreislauf gebildet, das Befeuchtungswasser den Wärmetauscherplatten 30 zuführt, über die Auffangschalen 40 überschüssiges Wasser auffängt, das vom Befeuchtungswasserspeicher 27 gesammelt und wieder den Wärmetauscherplatten 30 zugeführt wird.

Der Befeuchtungswasserspeicher 27 kann auch als großes Reservoir für Wasser, insbesondere Befeuchtungswasser, verwendet werden. Über nicht dargestellte Flüssigkeitsniveausensoren, die den Befeuchtungswasserfüllstand in den Befeuchtungswasserspeicher 27 messen, kann dem Befeuchtungswasserspeicher 27 bei Bedarf Wasser zugefügt werden. So wird sicher gestellt, dass sich immer ausreichend Wasser zur Befeuchtung der Wärmetauscherplatten 30 im Kreislauf befindet.

Die zuvor beschriebene Vorrichtung eignet sich auch zur Wärmerückgewinnung. Die Wärmerückgewinnung braucht nicht nach dem Prinzip der Verdunstungskühlung zu arbeiten. Dann kann die Befeuchtung der Wärmetauscher 29 unterbleiben. Eine Vorrichtung zur Wärmerückgewinnung braucht demzufolge keinen Befeuchtungswasserspeicher 27 und keine zur Befeuchtung dienenden Komponenten, insbesondere keine Wasserleitungen, aufzuweisen.

## Patentansprüche

1. Vorrichtung (10) zur Kühlung und/oder zur Wärmerückgewinnung mit mindestens einem Wärmetauscher (29), wobei mehrere zusammensetzbare Wärmetauschermodule (11) jeweils einen Wärmetauscher (29) aufweisen und die Wärmetauschermodule (11) derart zusammensetzbar sind, dass ihre Wärmetauscher (29) in einer Parallelschaltung betreibbar sind, wobei jedes Wärmetauschermodul (11) ein den Wärmetauscher (29) umgebendes Gehäuse (13) aufweist, welches an den Stirnseiten (16) jeweils eine Lufteintrittsöffnung (17) und eine Luftaustrittsöffnung (18) aufweist, wodurch jedes der aufeinanderfolgenden Wärmetauschermodule (11) zwei Lufteintrittsöffnungen (17) und zwei Luftaustrittsöffnungen (18) aufweist, wobei die Lufteintrittsöffnungen (17) und die Luftaustrittsöffnungen (18) von aufeinanderfolgenden Wärmetauschermodulen (11) übereinander liegen und die Wärmetauschermodule (11) eine gemeinsame Zuluftführung (21) und eine gemeinsame Abluftführung (20) aufweisen, wobei die Lufteintrittsöffnungen (17) und die Luftaustrittsöffnungen (18) aufeinanderfolgender Wärmetauschermodule (11) gleichermaßen von der gemeinsamen Abluftführung (20) und der gemeinsamen Zuluftführung (21) parallel mit Zuluft bzw. Abluft versorgbar sind, wobei den Wärmetauschermodulen (11) ein gemeinsamer Befeuchtungswasserspeicher (27) für Befeuchtungswasser zugeordnet ist, der mindestens eine Pumpe (39) aufweist, mit der Befeuchtungswasser aus dem Befeuchtungswasserspeicher (27) den Wärmetauschermodulen (11) zuführbar ist, wobei auch der Befeuchtungswasserspeicher (27) ein Gehäuse (13) aufweist, wodurch auf dem Befeuchtungswasserspeicher (27) die Wärmetauschermodule (11) übereinanderstapelbar sowie die übereinandergestapelten Wärmetauschermodule (11) und der Befeuchtungswasserspeicher (27) zu einer Einheit zusammenkoppelbar sind.

2. Vorrichtung (10) nach Anspruch 1, **dadurch gekennzeichnet, dass** jedes Wärmetauschermodul (11) ein Mittel zum Befeuchtungswasserzulauf (37) und ein Mittel zum Befeuchtungswasserablauf (35) aufweist, wobei die Mittel vorzugsweise durch das Verbinden bzw. Zusammenkoppeln der Wärmetauschermodule (11) verbindbar sind.

3. Vorrichtung (10) nach einem der vorhergehenden Ansprüche, **dadurch gekennzeichnet, dass** die Wärmetauschermodule (11) Mittel zum ineinandergreifenden Zusammensetzen derselben aufweisen.

4. Vorrichtung (10) nach einem der vorhergehenden Ansprüche, **dadurch gekennzeichnet, dass** das den Befeuchtungswasserspeicher (27) und den Wärmetauscher (29) jedes Wärmetauschermoduls (11) umgebende Gehäuse (13) aus gleichen Gehäusehälften (41, 47) gebildet ist.

5. Vorrichtung (10) nach einem der vorhergehenden Ansprüche, **dadurch gekennzeichnet, dass** die Gehäusehälften (41, 47) der Wärmetauschermodule (11) und der Befeuchtungswasserspeicher (27) jeweils ineinandergreifende Vertiefungen (31) und korrespondierende Vorsprünge (33) aufweisen durch welche die Gehäusehälften (41, 47) ineinandergreifend und/oder formschlüssig zusammensetzbar sind.

6. Vorrichtung (10) nach einem der vorhergehenden Ansprüche, **dadurch gekennzeichnet, dass** die, vorzugsweise alle, Wärmetauschermodule (11) zusammen von einem gemeinsamen Gehäuse umschlossen werden.

## Claims

1. An apparatus (10) for cooling and/or for heat recovery having at least one heat exchanger (29), wherein a plurality of heat exchanger modules (11), which can be assembled together, each have a heat exchanger (29) and the heat exchanger modules (11) can be assembled together in such a way that the heat exchangers (29) thereof can be operated in parallel, wherein each heat exchanger module (11) has a housing (13) which surrounds the heat exchanger (29) and has an air inlet opening (17) and an air outlet opening (18) at each of the end faces (16), whereby each of the successive heat exchanger modules (11) has two air inlet openings (17) and two air outlet openings (18), wherein the air inlet openings (17) and the air outlet openings (18) of successive heat exchanger modules (11) are situated one above the other and the heat exchanger modules (11) have the common supply air duct (21) and the common exhaust air duct (20), wherein the air inlet openings (17) and the air outlet openings (18) of successive heat exchanger modules (11) can be equally supplied by the common exhaust air guide (20) and the common supply air guide (21) in parallel with the respective supply air and exhaust air, wherein the heat exchanger modules (11) are assigned a common wetting water reservoir (27) for wetting water, which has at least one pump (39), by means of which the wetting water from the wetting water reservoir (27) can be fed to the heat exchanger modules (11), wherein the wetting water reservoir (27) also has a housing (13), as a result of which the heat exchanger modules (11) can be stacked one on top of the other on the wetting water reservoir (27) and the heat exchanger modules (11) stacked one on top of the other and the wetting water reservoir (27) can be coupled together to form a unit.

2. The apparatus (10) as claimed in claim 1, **characterized in that** each heat exchanger module (11) has a means for wetting water feed (37) and a means for wetting water discharge (35), wherein the means can preferably be connected by connecting or coupling together the heat exchanger modules (11).

3. The apparatus (10) as claimed in one of the preceding claims, **characterized in that** the heat exchanger modules (11) have means for assembly involving interengagement.

4. The apparatus (10) as claimed in one of the preceding claims, **characterized in that** the housing (13) surrounding the wetting water reservoir (27) and the heat exchanger (29) of each heat exchanger module (11) is formed by identical housing halves (41, 47).

5. The apparatus (10) as claimed in one of the preceding claims, **characterized in that** the housing halves (41, 47) of the heat exchanger modules (11) and the wetting water reservoir (27) each have interengaging depressions (31) and corresponding projections (33), by means of which the housing halves (41, 47) can be assembled with interengagement and/or in a positive fit.

6. The apparatus (10) as claimed in one of the preceding claims, **characterized in that** the heat exchanger modules (11), preferably all the heat exchanger modules, are jointly surrounded by a common housing.

## Revendications

1. Dispositif (10) de refroidissement et/ou de récupération de chaleur comprenant au moins un échangeur de chaleur (29), une pluralité de modules à échangeur de chaleur (11) qui peuvent être assemblés comportant chacun un échangeur de chaleur (29) et les modules à échangeur de chaleur (11) pouvant être assemblés de manière que leurs échangeurs de chaleur (29) puissent fonctionner dans un circuit parallèle, chaque module à échangeur de chaleur (11) comportant un boîtier (13) qui entoure l'échangeur de chaleur (29) et qui comporte une ouverture d'entrée d'air (17) et une ouverture de sortie d'air (18) sur chacun des côtés frontaux (16) de sorte que chacun des modules à échangeur de chaleur (11) comporte deux ouvertures d'entrée d'air (17) et deux ouvertures de sortie d'air (18), les ouvertures d'entrée d'air (17) et les ouvertures de sortie d'air (18) de modules à échangeur de chaleur (11) successifs étant situées les unes au-dessus des autres et les modules à échangeur de chaleur (11) comportant un conduit d'alimentation en air commun (21) et un conduit d'évacuation d'air (20), les ouvertures d'entrée d'air (17) et les ouvertures de sortie d'air (18) de modules d'échangeur de chaleur (11) successifs pouvant être alimentées en parallèle avec de l'air d'entrée ou de l'air de sortie de la même manière à partir du conduit d'évacuation d'air commun (20) et du conduit d'alimentation en air commun (21), les modules à échangeur de chaleur (11) étant associés à un réservoir d'eau d'humidification commun (27) qui est destiné à de l'eau d'humidification et qui comporte au moins une pompe (39) avec laquelle l'eau d'humidification provenant du réservoir d'eau d'humidification (27) peut être amenée aux modules à échangeur de chaleur (11), le réservoir d'eau d'humidification (27) comportant également un boîtier (13) permettant d'empiler les modules à échangeur de chaleur (11) les uns sur les autres sur le réservoir d'eau d'humidification (27) et d'accoupler les modules à échangeur de chaleur (11), empilés les uns sur les autres, et le réservoir d'eau d'humidification (27) ensemble pour former une unité.

2. Dispositif (10) selon la revendication 1, **caractérisé en ce que** chaque module à échangeur de chaleur (11) comporte un moyen d'entrée d'eau d'humidification (37) et un moyen de sortie d'eau d'humidification (35), les moyens pouvant être reliés de préférence par liaison ou accouplement des modules à échangeur de chaleur (11) ensemble.

3. Dispositif (10) selon l'une des revendications précédentes, **caractérisé en ce que** les modules à échangeur de chaleur (11) comportent des moyens d'assemblage de ceux-ci par emboîtement.

4. Dispositif (10) selon l'une des revendications précédentes, **caractérisé en ce que** le boîtier (13), qui entoure le réservoir d'eau d'humidification (27) et l'échangeur de chaleur (29) de chaque module à échangeur de chaleur (11), est formé de moitiés de boîtier identiques (41, 47).

5. Dispositif (10) selon l'une des revendications précédentes, **caractérisé en ce que** les moitiés de boîtier (41, 47) des modules à échangeur de chaleur (11) et le réservoir d'eau d'humidification (27) comportent chacun des creux d'emboîtement (31) et des saillies correspondantes (33) qui permettent d'assembler les moitiés de boîtier (41, 47) par emboîtement et/ou complémentarité de formes.

6. Dispositif (10) selon l'une des revendications précédentes, **caractérisé en ce que** les modules à échangeur de chaleur (11), de préférence tous, sont enfermés ensemble par un boîtier commun.
